# EUROPEAN PATENT APPLICATION

(11) **EP 0 556 101 A1**
(43) Date of publication of application: **18.08.1993**
(21) Application number: 93400297.3
(22) Date of filing: 05.02.1993
(51) Int. Cl.: A23B 7/005, A23B 9/02

(54) **Method and apparatus for continuous sterilization and drying of spices and leafy herbs**

(30) Priority: 07.02.1992 US 832341
(71) Applicant: McCORMICK & COMPANY, INCORPORATED, Sparks, MD 21152-6000 (US)
(72) Inventor: Shieh, Ron C., Maryland 21030 (US)
(74) Representative: Legendre, Gérard

(57) **Abstract**

A selected type of superficially cleaned and dried vegetable product such as leafy herb is fed from a supply along a conventional conveyor 11 to a hopper 10 which has an outlet feed to an air lock which comprises a first valve 17, followed by a metering chamber 17A and a second valve 17B which may be an airlock such as a conventional rotary, multi-vane valve which discharges directly to the inlet 21 of a sterilizing vessel 12. The vessel 12 may be of commercial construction and will typically be of stainless steel in cylindrical form having a motor drive and gearing box 15 adjacent the inlet end thereof and a bearing mount and seal wall 19 at the opposite end thereof adjacent the discharge outlet 23. Preferably the vessel 12 is jacketed as indicated at 14 to facilite close control of the temperature of the interior of the vessel.

## Description

### BACKGROUND OF THE INVENTION

### 1. Field of the Invention

The present invention relates a method and apparatus for the substantially continuous sterilization of volatile oil bearing herbs and spices in order to preserve the desirable organoleptic properties of the herbs and spices while rendering them safe for human consumption, subsequent food processing and storage with increased shelf life.

### BACKGROUND AND SUMMARY OF THE INVENTION

As described in commonly assigned United States Patent 4,844,933, sterilization of agricultural food products without the use of radiation or chemicals to kill bacteria carried by the food product has been desired for some time in the food processing industry. As explained in the aforementioned patent, the sterilization of a variety of dry vegetable products such as leafy herbs and spices requires the satisfaction of several different and often conflicting criteria in order to arrive at a marketable product at a reasonable cost. A primary concern, relative to the processing of leafy herbs, is the preservation of the appearance and the organoleptic properties mainly carried by the volatile oil in the herbs while assuring a satisfactory level of sterilization to render the products safe for human consumption.

### DESCRIPTION OF THE PRIOR ART

In commonly assigned U.S. Patents 4,844,933 and 4,967,651, there are described processes and apparatus for sterilization of vegetable products which can be termed batch systems where a discrete quantity of raw vegetable product is placed within a vessel system for exposure to sterilizing, culinary steam for a selected period of time and at a selected pressure so as to sterilize and preserve the appearance and organoleptic properties of the product. While the apparatus and processes of the aforementioned patents have proven successful, it has been desired to increase the production throughput capacity for the sterilization process while preserving the significant advantages of the batch system, namely, thorough sterilization of the vegetable product while preserving the appearance, flavor level, moisture and oil content, aroma and texture of the vegetable product. As is well known, almost all leafy herbs are particularly susceptible to substantial alteration or damage when subjected to various sterilization processes particularly steam sterilization where the exposure to elevated temperatures for excessive periods of time results in essentially cooking the vegetable product with the consequent adverse effects on the characteristics that a user desires to preserve. Moreover, it is a common practice for the herbs to be dried by exposure to sunlight and ambient air or in a drier after harvesting and before shipping the product to a processing plant where the product is to be sterilized and packaged. This has been necessary to enable the product to be shipped in bulk to further processing sites but also renders the soft herbs more fragile thereby requiring a subsequent processor to use relatively gentle processing techniques when sterilizing such materials. In other prior art processes, where the spices are of a more robust nature, that is, the hard shell variety such as seeds, roots or barks, it has long been the practice to simply expose the constituents to sterilizing steam for a sufficient period of time to thoroughly sterilize the product while transporting the product continuously from the source to a subsequent packaging device. One such technique has been described by Euroma Food Ingredients at a New Products Seminar held in Paris France in October 1991. This process is described as involving exposing a herb or spice to superheated steam for a short period of time followed by drying. Although this process has been described as suitable for seed products such as pepper, cumin and nutmeg as well as herbs and powdered spices such as paprika and curry, it is generally known that herbs cannot be successfully processed by this technique. When herbs are treated as described by Euroma, most of the aroma and flavor values are lost as a result of the sterilization procedure described. On the other hand, when a hard shell spice such as pepper is treated by the described technique a sterilized product may result. Thus, the Euroma continuous process cannot be used with herbs where a substantial microbiological reduction is desired.

The only successful procedure for steam sterilizing herbs without losing flavor and organoleptic properties is the procedure described in USP 4,844,933 and 4,967,651. Accordingly, a need continues to exist for a continuous process for the steam sterilization of herbs and other vegetable products having their aroma and flavor contained in volatile oil and having a soft outer structure which is permeable to the volatile oils under steam sterilization conditions.

### SUMMARY OF THE INVENTION

Thus one object of this invention is to provide a continuous steam sterilization process to sterilize herbs.

A further object of the invention is to provide a continuous steam sterilization process to sterilize substances whose flavor and aromas are derived from volatile oils which are lost from the substance under steam sterilization conditions.

Another object of this invention is to provide a continuous steam sterilization method for herbs, spices and other vegetable products which retains the volatile oils components in the vegetable products after steam sterilization.

These and other objects of this invention which will become obvious hereafter have been achieved by a process which comprises subjecting the vegetable product to steam in a first vessel followed by transfer to a second vessel where the vegetable product is cooled under conditions which cause the sterilization steam and vaporized flavor oils to condense on the vegetable product to recover volatile oil components from the steam.

With the present invention provides an apparatus and process for the rapid and thorough sterilization with the more delicate spices and herbs such as the leafy herbs and soft bodied spices which utilizes a first steam sterilization vessel having air lock means at its entrance and exit ports. The sterilization vessel contains means for transporting the leafy herbs or soft bodies spices from the inlet port to the outlet port as well as means for exposing the surfaces of the products to be sterilized to steam. The apparatus further contains a cooling vessel in which the sterilizing steam is caused to condense on the product which has been sterilized to thereby recover the volatile oil components which are volatilized during the sterilization process.

The foregoing and other advantages will become apparent as consideration is given to the following detailed description taken in conjunction with the accompanying drawings, in which:

### BRIEF DESCRIPTION OF THE DRAWINGS

Figure 1 is a schematic illustration of the apparatus used in carrying out the method of the present invention;
Figure 2 is a detailed sectional view looking transverse to the axis of the sterilizing vessel of the present invention; and
Figures 3a-3d are sectional and perspective views of elements of the airlock system that may be used with the present invention.
Figures 4 and 5 are directed to another embodiment of the present invention where sterilization occurs in a sterilization chamber where no agitation of the product undergoing sterilization occurs.

### DETAILED DESCRIPTION OF THE INVENTION

In the present invention culinary steam is used to sterilize the vegetable product. Essentially any vegetable product could be sterilized in the present technique but it has found its greatest utility in sterilizing vegetable products whose aroma and flavor value are found in the volatile oils contained in such products. Examples of such products include herbs and spices, particularly leafy herbs and delicate spices. Delicate spices are those not having a hard shell. Hard shell spices such as pepper can be sterilized in this technique, however, because of the hard shell they can also be successfully processed by other steam sterilization techniques as well. Thus the preferred vegetable products for treatment in this technique are leafy herbs and delicate spices and, in particular, herbs.

The sterilization is accomplished using culinary steam. Culinary steam is steam generated from potable water which is generally generated in a stainless steel boiler from softened potable water. The steam pressure is not critical and may range from 5 to 50 psig in the steam sterilizer. Typical steam pressure in the steam sterilizer may range from 5 to 30 psig and more preferably from 8 to 12 psig. The steam used may either be saturated or superheated steam. Superheated steam having from 30-150°F of superheat may help reduce the amount of steam condensate without reducing the effectiveness of steam sterilization. Saturated steam is preferred because it is cheaper and easier to generate. If saturated steam is used it is preferred to dry the steam to reduce the moisture content of the sterilized vegetable product to reduce the load on the dryer. Saturated steam is dried by the use of condensate traps or other means to remove condensed steam (water) from the steam.

The steam sterilization vessel may be of any suitable size or shape. The vessel has a means for conveying the vegetable product from the inlet to the outlet while simultaneously exposing the surfaces of the vegetable product to the steam. Thus, the product should be agitated as travels from the inlet to the outlet. Exposure of all the surfaces to the steam is necessary to effect the sterilization in the shortest possible time. If the product is not agitated to expose all the surfaces, then either longer times are required to achieve sterilization or the finished product will contain a higher microorganism load than may be desirable. Excessive residence times in the sterilizer will cook the vegetable product and should be avoided. Suitable residence times in the steam sterilizer exclusive of the airlocks are generally less than a few minutes, preferably less than one minute and more preferably 2-20 seconds. The actual residence time will vary depending upon conveyor speed, screw rotational speed, vessel volume, volume of vegetable product charged and the desired final microorganism content desired in the final product.

Means for conveying and agitating the vegetable product is not critical and may include the use of conveyor screws, endless conveyor belts as described in PCT (WO 90/00865), paddles, and inclination and rotation of the sterilization vessel itself. The use of screws or paddles simultaneously agitate and convey the vegetable product. If a conveyor is employed, the belt may be of a mesh structure and steam may be injected under the belt through injection nozzles to impart agitation. If the vegetable product is present as only a thin single layer such that all surfaces are exposed, then agitation may be eliminated.

The vegetable product are introduced and removed from the sterilizer through the use of air locks so as to maintain the internal steam pressure in the sterilizer vessel. Any type of air lock may be used. A preferred type of air lock is the multi-vaned rotary valve. Alternatively, air locks such as those illustrated in PCT WO 90/00865 may also be used but without removal of the steam. The time the product spends in the air lock is not critical. When using multi-vaned rotary valves as the air lock, residence of times of from 2 to 10 seconds are typical.

The sterilizer can be simplified by the utilization of the semi-continuous process. In the semi-continuous process, the product to be sterilized is introduced batchwise into a closed container, the container subject to vacuum from 10 inches of mercury to full vacuum (30 inches of mercury), perferrably in the range of 25 to 30 inches of mercury. The vacuum is broken by the introduction of steam under pressure in the range of 15 to 40 psig, preferrably 20 to 30 psig. The contents are then immediately introduced into the cooler which will be discussed in detail below. In this particular embodiment, the contact time is very short, only the amount of time necessary to equilibrate the vessel pressure with the supply steam pressure. Times on the order of 4 to 5 seconds have been found satisfactory. It is preferred that the volume of herbs which is sterilized in any particular batch be small to facilitate good contact between the steam and the product. The use of vacuum is essential in order to ensure that the surfaces of the product to be sterilized are contacted with the steam. If one simply injects the steam into the vessel at atmospheric pressure, the air in the vessel acts as an insulator precluding good sterilization in this technique. In this technique, no agitation is necessary and the apparatus is comparatively simple since no internal screws or conveying devices are necessary. In use, a small chamber may be formed between two butterfly or other valves. The product to be sterilized is introduced through a hopper into the chamber either completely under the flow of gravity or through the use of conveying screws in the hopper. To assist in filling the chamber with the product, especially when treating leafy herbs, it is often desirable to place the chamber under vacuum to assist in the introduction of the leafy herbs into the chamber. Quite often, leafy herbs are light and fluffy and may not flow in an even manner or under the simple action of gravity. The use of a vacuum assist in introducing such materials into the chamber. Once the product is introduced in the chamber, the chamber is sealed, a vacuum drawn and steam then introduced. This particular mode of operation offers several potential advantages over that described previously. First, it eliminates the internal conveying means in the sterilizing vessel thereby simplifying the apparatus to improve reliability. Second, it reduces the product size degradation due to less mechanical handling. Third, the comparatively small size simplifies the installation of the sterilizing vessel.

From the outlet of the sterilization vessel, the sterilized product is introduced into a cooler through the airlock. The purpose of the cooler is primarily to condense the sterilizing steam which contains a portion of the volatile oils from the product. It is preferred that the steam condense on the vegetable product so as to capture the maximum amount possible of the volatile oil from the steam. This may be accomplished by operating the cooler at ambient pressure and under conditions such that the vegetable product is disposed across substantially all of the cross section of the cooler such that the steam is cooled and condensed on the vegetable product. In this manner the volatile oils which were vaporized in sterilizer may be recaptured. The cooler preferably comprises a moving bed of vegetable product through which the steam must pass before exiting the cooler. In a preferred embodiment, the vegetable product is conveyed is conveyed in the cooler from its inlet to its outlet using a hollow flight twin screw conveyor such as that produced by THERM-A-CORE of Fremont, California. This apparatus allows for maximum contact of the steam and vegetable product in the cooler and the simultaneous cooling of the herbs through heat exchange with the screw conveyor. Alternative means of cooling the vegetable product may be used. For instance, cooling coils may be disposed in the moving vegetable product bed to cool the vegetables so that the steam will condense thereupon. Alternatively, the cooler may comprise an inclined rotating vessel with cooled walls. As the vessel is rotated the vegetable product contacts the cooled walls which reduces its temperature, as the cooler continues to rotate the cooled product contacts the steam to cause it to condense on the vegetable product.

The residence time in the cooler is not critical so long as it is sufficient to cause the majority and preferably almost all of the steam to condense on the vegetable product. Thus, sufficient product should be retained in the cooler to provide for the necessary steam condensation. Residence times of less than 10 minutes have proven adequate. The temperature of the vegetable product as it enters the cooler is generally about 150 to 230°F and about 70 to 120°F as it exits the cooler, however, higher or lower entrance and exit temperatures are possible so long as sufficient steam is condensed on the product in the cooler. The product as it exits the sterilizer has a temperature of about 200 to 250°F. The herbs under cooling when the presence is released upon entry into the cooler and this accounts for the difference in product temperature between the exit of the sterilizer and enhancer to the cooler. The temperature of the product in the sterilizer will be determined by the residence time necessary to achieve stem contact with all vegetable product surfaces. Residence times in both the sterilizer and cooler will vary depending upon the specific vegetable product, type of equipment and volume of the product to be treated. Typically the residence time will be reduced by more vigorous agitation. The degree of agitation should be selected so as to not damage the vegetable product and will vary from product to product depending on the product's ability to withstand agitation.

Once the product has been cooled and the steam condensed it should be dried back to its original moisture content. When the vegetable product is a herb, the original moisture content is about 6 to 12% wet basis. During the treatment the vegetable product's moisture content will generally increase by about 5 to 20 wt.% wet basis based on the original weight as a result of the condensed steam. If superheated steam is used the amount of moisture increase may be less while the use of wet saturated steam may result in higher moisture contents in the product as it exits the cooler. The drier and drying conditions are not critical and may be those taught in USP 4,844,933 or PCT (WO 90/00865). Other drying conditions and apparatus may also be used to return the vegetable product to about its original moisture content. Preferably filtered air is used to avoid microbiological contamination and the product is conveyed and packaged under conditions which limit or avoid contamination of the sterilized product. If the product is to be immediately used after sterilization, the drying step may be eliminated or the degree of drying may be reduced.

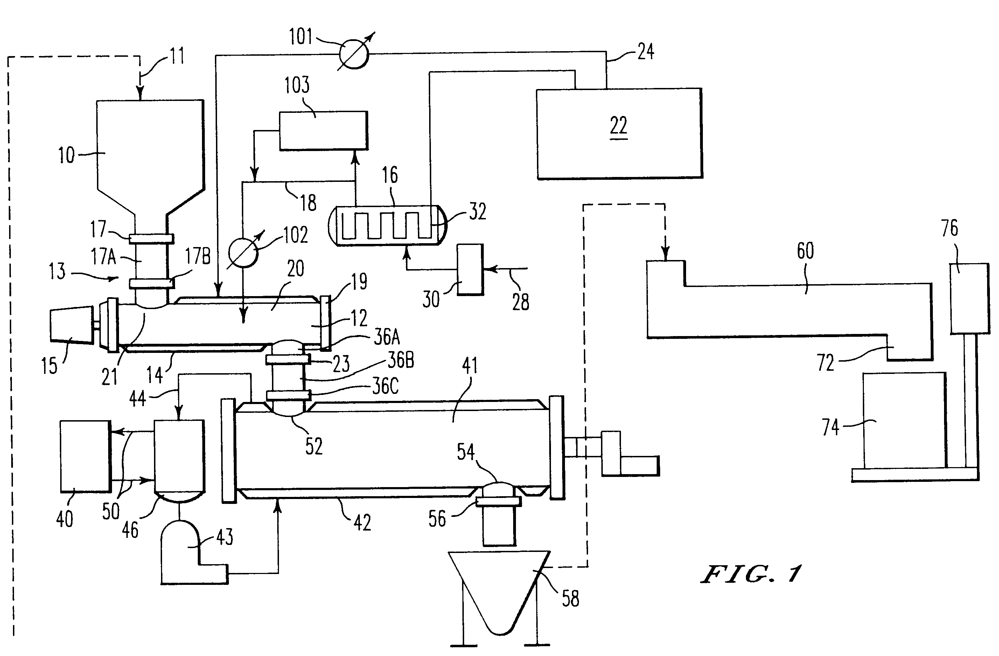

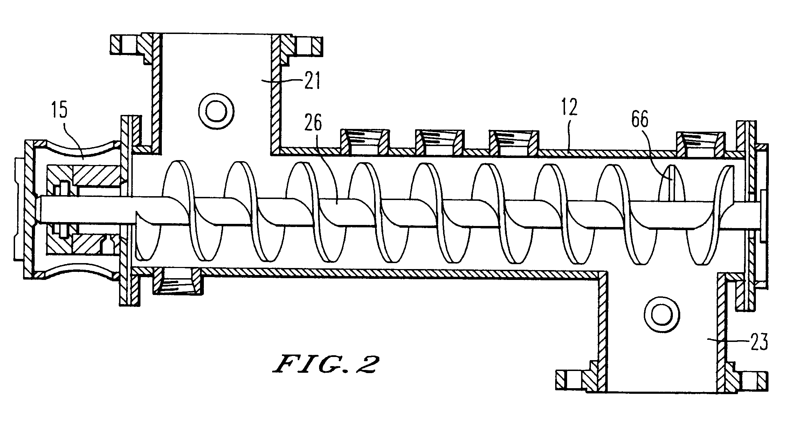

A description of the particularly preferred embodiment by reference to the drawings wherein like numerals designate corresponding parts throughout the several views, there is shown in Figure 1 a schematic view of the apparatus useful in carrying out the process of the present invention. According to the process, a selected type of superficially cleaned and dried vegetable product such as a leafy herb or one selected from some of the hard shell spices is fed from a supply along a conventional conveyor 11 to a hopper 10 which has an outlet feed to an air lock which comprises a first valve 17, followed by a metering chamber 17A and a second valve 17B which may be an airlock such as a conventional rotary, multi-vane valve (see Figure 3c) which discharges directly to the inlet 21 of a sterilizing vessel 12. The vessel 12 may be of commercial construction and will typically be of stainless steel in cylindrical form having a motor drive and gearing box 15 adjacent the inlet end thereof and a bearing mount and seal wall 19 at the opposite end thereof adjacent the discharge outlet 23. Preferably the vessel 12 is jacketed as indicated at 14 to facilitate close control of the temperature of the interior of the vessel. Inside the vessel, a helical screw, shown in Figure 2 at 26, is rotatably mounted as will be described below. Use of a variable speed control for the airlock system 13 will allow control of the discrete batches that are fed to the interior of the vessel 12 and to thereby avoid overloading the screw 26. Close correlation of the operation of the airlocks and the screw 26 will result in substantially continuous throughput of the product.

In carrying out a sterilizing process, steam, preferably culinary steam which is defined as steam derived from heating clean, potable water, is fed from a source 28 through a filtering system and preferably a water softener 30 to a steam generator 16 which may be heated by any suitable means, such as by steam coils fed from the primary boiler 22. Located on the interior of the vessel 16 is a heat exchange conduit 32 through which steam is circulated between the interior of the conduit 32 and the primary boiler 22. From the primary boiler 22 through conduit 24, steam pressure may be regulated to a desired level by a steam regulator 101 and the steam is fed to the jacket 14 to maintain the interior of the chamber at a selected temperature. The jacket 14 heating means may include electric coils or heating tapes or strips. From the vessel 16, culinary steam will be continuously injected directly into the interior of the vessel 12 through a suitable valve of conventional construction. For most dry vegetable products of the type where the market is interested in preserving the organoleptic properties as described above, the steam pressures employed in the interior of the vessel 12 during the continuous sterilization process of the present invention should range from 5 to 25 psig, controlled by the steam regulator 102, and the conveying through put time in the vessel 12 between the valve 17B and the discharge valve system 34 is preferably between 2 and 20 seconds and does not include the additional holding time in the discharge valve system 34. The culinary steam may be superheated by passing the saturated steam generated in the culinary steam generator 16 through a steam superheater 103 to thus produce superheated steam. The heating means in the superheater 103 may be electric. The product throughput speed in sterilizer 12 is achievable with adequate agitation during the transport by the use of a helical screw conveyor as illustrated in Figure 2 and described below in more detail.

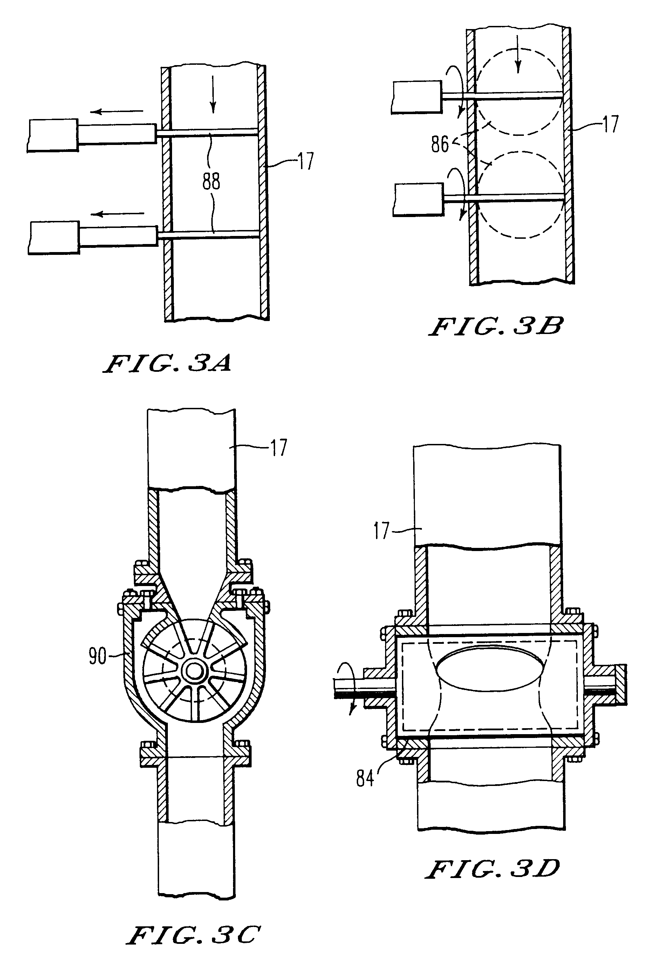

Automatic discharge through an airlock system 34 is employed both to assure discharge with a rapidity that is substantially continuous from the outlet of the vessel 12 and to preserve the selected conditions of temperature and pressure within the vessel 12. To this end, the airlock valve 34 employs a dual valve arrangement as shown in Figures 3a and 3b. That is to say, a first valve 36A periodically opens and shuts to allow a metering chamber 36B to fill whereupon valve 36A will close and discharge valve 36C will open to effect discharge to the cooling vessel 41. Again, the multi-vane type valve of Figure 3c or the vaneless rotary valve of Figure 3d is suited for this type of operation.

As will be readily apparent to those skilled in this art, computer control including a terminal display of the throughput speed of the helical screw 26 and the various valves, 17, 17B and 36A and 36C can be readily effected and monitored from a central work station to maintain the substantially continuous flow of the vegetable product through the sterilizing stage and the airlock systems.

The cooling vessel 41 may be of identical design as of the sterilizing vessel 12 but preferably will have larger dimensions to accommodate a greater quantity of the vegetable product during the cooling process. The cooling vessel 41 will preferably have a jacket 42 through which is circulated cooling fluid, e.g. water, from a pump 43. To carefully control the temperature of the interior of the cooling vessel 41, recirculation of the cooling fluid from the jacket 42 is effected through conduit 44 and cooling recirculation tank 46 which feeds the cooling fluid to a chiller tank 40 connected directly thereto by pipes 50. The temperature of the chiller tank is regulated by a conventional temperature sensor. On the interior of the cooling vessel 41 agitation means may be provided such as those described in U.S. Patent 4,844,933, the disclosure of which is incorporated herein by reference. The product in the cooler is cooled to a temperature between 70 and 120°F before discharging. A screw conveyer such as that disclosed in Figure 2 for the vessel 12 may alternately be employed. However, since the throughput speed of the product through vessel 41 is not as critical as in vessel 12, the expense of a helical screw conveyer need not be incurred. In any event, conveying means of any suitable kind may be employed to convey the vegetable product from the inlet 52 to the outlet 54 of the vessel 41 where the product is discharged through a valve 56 to either a conveying means such as a flexible belt or screw conveyor or a hopper 58 from which the product is moved to a drying vessel 60. Depending on the type of cooler vessel 41 is used and its operating conditions, valve 56 may not be needed. Thus, the interior of cooler 41 is maintained at approximately atmospheric pressure. The drying vessel 60 in Figure 1 may be located directly underneath the outlet 54 of the vessel 41, and thus eliminating the need of the conveyor and a hopper 58.

While the above described system and process are designed to gently yet rapidly process delicate leafy and similar type herbs, the system may also, of course, be used in the treatment of hard shell spices such as hard shell spices such as allspice, anise, annatto, caraway, cardamon, celery seeds, coriander, cumin, dill seed, fennel, fenugreek, mustard seed, nutmeg, poppy seed, cinnamon, ginger, turmeric and capsicum. With these types of spices, the cooler vessel 41 and the supporting coolant recirculation system 46 are not required. The product discharged from the airlock valve system 34 can be directly injected into the dryer system 60 by situating the dryer inlet directly underneath the airlock 34.

While the vessel 60 is illustrated schematically in Figure 1, it will be understood that a variety of different types of drying structures can be employed. For example, fluidized bed drying where the vegetable product is conveyed over a perforated plate through which hot air is projected upwardly may be employed. In addition, a vibrating fluidized bed dryer or a vacuum dryer may also be employed where a vacuum pump maintains the atmosphere in a closed drying vessel at a suitably low pressure to assist in rapid evaporation of water from the product. A conveying chamber through which the product is moved by paddles or a helical screw may be employed where hot air is constantly moved through the vessel as an effective alternative. A belt dryer where the hot air is moved upward through the vegetable product while conveyed on the belt can also effect satisfactory drying results. Preferably, in each system, the drying air temperature should be between 70° and 300°F, and even more preferably between 100 and 250°F the higher temperatures giving rise to more rapid transport times through the drying system. A continuous dryer may also have multiple drying zones with the last zone used as a cooling zone.

Of particular importance to the success of the process in the described apparatus is the control of the feed of the dry vegetable product from the feed hopper 10 to the inlet of the sterilizing vessel 12. With this aspect of the process of the present invention, it will be apparent that control of the operation of the airlock system 13 is necessary so that overfeeding of the vegetable product to the airlock will be avoided. This will to a large extent depend on the particular vegetable product being treated and it will be apparent that a trial and error method for achieving the best results will be necessary due to the variations of the physical characteristics of the vegetable products that may be sterilized with the present apparatus.

Turning now to Figure 2, there is shown a more detailed view of the helical screw 26 mounted in the cylindrical vessel 12 with the conventional electrical drive motor and gearing omitted for clarity. The helical screw 26 is rotatably mounted with its end carried in conventional sealing bearings, such as fluid-cooled, double-face mechanical seals, and its axis extending parallel and coaxially along the axis of the cylindrical vessel 12. According to the present invention, to control the throughput speed of the vegetable product exposed to the flights of the screw 26 through inlet 21, right-handed flights are provided which move the product forward as shown in Figure 2 up to the discharge outlet 23 where the flights of the screw are reversed at 66 to facilitate discharge through the outlet 23 through the first valve 36a of the airlock system 34 shown in Figure 1. This screw arrangement greatly enhances the control, product flow and exposure of the vegetable product to the sterilizing steam even for powder and fine granules, which is a feature which permits the transport through the sterilizing vessel 12 to the outlet 23 at a speed greatly enhanced over that which was available in the prior art processes.

In employing the present invention, Egyptian basil was successfully sterilized at approximately 9 psig with a 10 second residence time in the sterilizing vessel 12. It is contemplated that the other leafy herbs and comparable spices such as bay leaves, thyme, marjoram, rosemary, savory, oregano, sage, mint, parsley, cilantro, dill and tarragon can also be effectively sterilized and processed according to the present invention where the residence time in the sterilizing vessel is no greater than 30 seconds and is preferably maintained within the range of 2 to 20 seconds. The short residence time of the process greatly contributes to the preservation of the above enumerated, desirable properties so that the sterilized product will retain substantially its appearance and organoleptic functionalities such as flavor and aroma.

The pressure in the sterilizing vessel is maintained at between 5 and 25 psig with a range of 8-12 psig being preferred for leafy herbs. In treating hard shell spices, the pressure and residence times may be somewhat higher.

In carrying out the process of the present invention, it will be apparent that continuous agitation of the dry vegetable product as well as the sterilized vegetable product is important to obtain the best results.

In the cooling vessel 41, it is preferable to maintain the interior temperature at between 35° and 65°F and this can be readily achieved by the cooling water jacket system described. In the vessel 41, it is preferred to utilize a rotary paddle or a rotary screw system to effect the agitation and conveying from the inlet 52 to the discharge outlet 54.

In the drying vessel, as previously noted, the temperature to which the vegetable product should be exposed may range between 70° and 300°F, preferably in the range of 100 and 250°F, and this may be achieved with any of the apparatus described above. The dryer can have more than one drying zone set at different temperatures. Within the above noted temperature ranges in the drying vessel, the conveying time through the drying vessel may range from about one minute at higher temperatures to as high as 120 minutes at lower temperatures for a wide range of leafy herbs and spices.

The types of valves used in the airlock systems will of course be important to production throughput efficiency. Use of vaneless type valves 84 for each valve of the airlock systems 13 and 34 offers the advantage of operating simplicity. It will be apparent to those skilled in the art that double butterfly type valves 86 and double gate type valves 88 may also be employed as well as slide valves as are conventionally used in flow control in material handling. Of particular importance is the preservation of the temperature and pressure conditions in the vessels 12 and to this end, rotary multi-vane airlock type valves may be employed at 13 and 34 to minimize any disturbance of the temperature and humidity conditions in the sterilizing vessel 12 or the cooling vessel 41. In addition, in loading from the hopper 10, a positive feed such as a screw conveyer in the hopper 10 may be employed to positively feed the dry vegetable product through valve 17 into the metering chamber 17a. Alternatively, a steam release duct may be installed in the hopper 10 to vent steam carried over by the airlock system 13. Again, variable speed control of hopper feed screw , the sterilizing vessel's transport screw and the valves of the airlocks is readily achievable by those skilled in this art.

From the dryer 60, the vegetable product will be discharged through an outlet 72 to a collection hopper 74 which may be provided with the conventional weighing apparatus control 76 which will signal an operator to exchange hoppers 74 when the subjacent hopper is loaded to a predetermined level or weight.

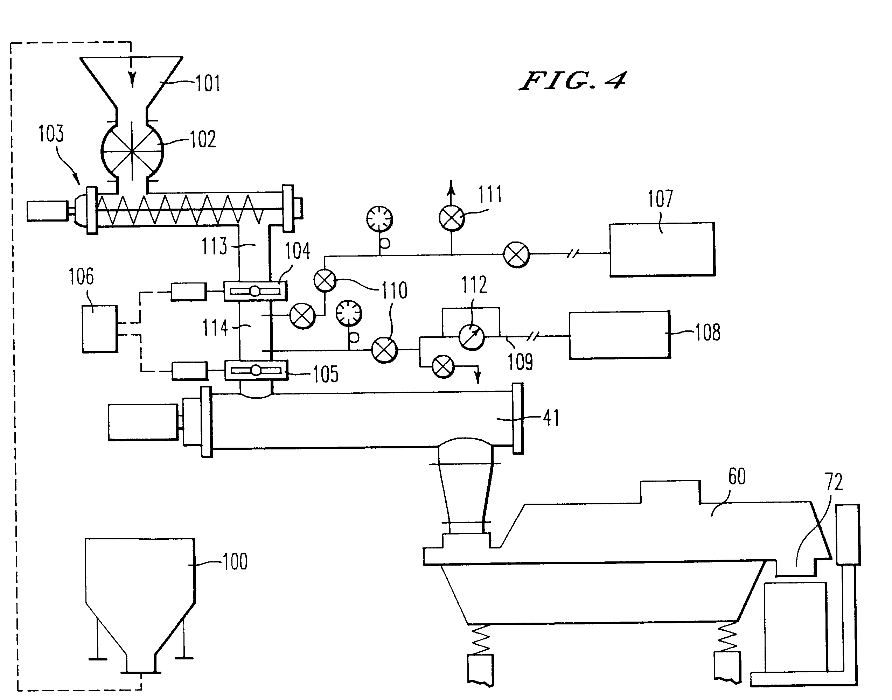

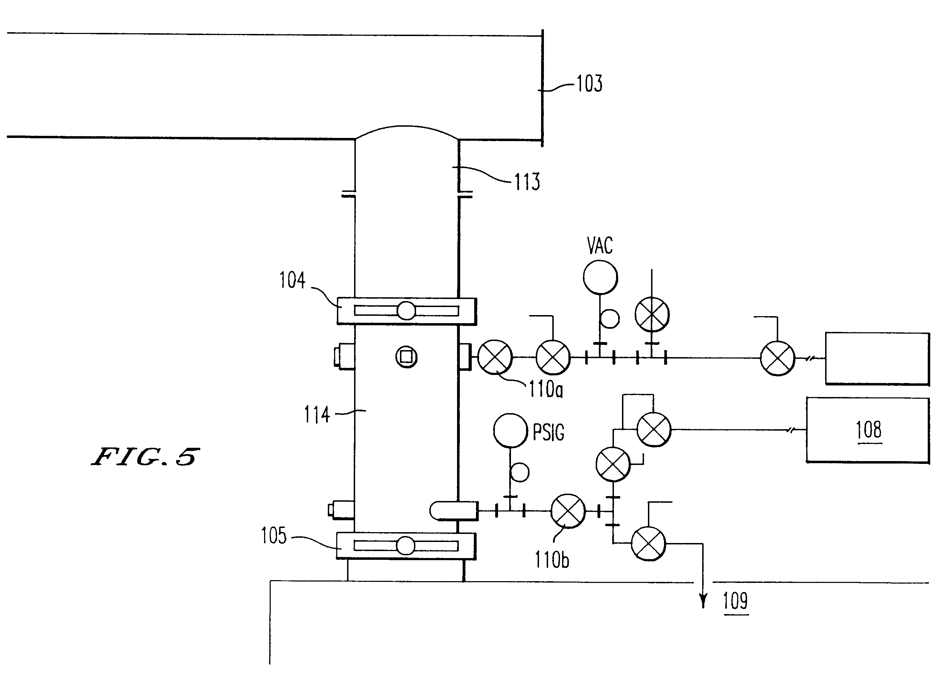

In Figures 4 and 5 are illustrated a simplified sterilization apparatus which avoids the necessity of agitating the product to be sterilized during the sterilization procedure. This concept will now be exemplified with reference to Figures 4 and 5. Figure 4 shows the general overall apparatus flow scheme. Items 41, 60, 72, 74 and 76 are the same as the described previously. In this embodiment, the product from feedbin 100 is introduced into surge hopper 101 where it is introduced into a variable speed conveyor, 103 through a rotary airlock 102. The purpose of the rotary airlock is to determine the rate at which product is introduced into the sterilization chamber 114 by a batching chamber 113 and conveyor 103. The use of the conveyor 103 is optional and can be eliminated if desired. The product exists the variable speed conveyor and is introduced into batching chamber 113. The product and batching chamber 113 is introduced into the sterilization chamber 114 through charging valve 104. Typically the charging valve will be a butterfly valve but any type of valve which can be used to seal the sterilization chamber from the batching chamber may be employed. A sequence timer 106 controls the opening and closing of the charging and valve 104 and the discharging valve 105 in accordance with the program sequence. This program may be controlled by a computer, manually or using other control sequence schemes. The sterilization chamber is connected to a vacuum source 107. The vacuum source 107 may contain conventional condenser means or traps in order to remove water vapor and product debris before reaching the vacuum pump. Assorted vacuum gauges and valves associated with the vacuum means are not illustrate. A vent 111 is provided to break the vacuum if that is desired. A culinary steam generator, 108 is also provided as is a steam pressure regulator 112 and a drain provision 109. Although not shown, the culinary steam may be superheated as discussed previously or provided with the means for moving condensate via drain 109. Solenoid valves, shown as 110, control the introduction of steam and the vacuum line into the sterilization chamber. The product from the sterilization chamber is discharged into a continuous cooler, 41 which is similar to that described previously. The remainder of the processing apparatus is as described above.

The process will now be described with reference to Figure 5. In this particular example, the total cycle time is 20 seconds and the steam injection time is 5 seconds. In this example, the product is introduced in the sterilization chamber by first opening and then closing valve 104. The full sequence of opening valve 104, introducing the product and closing the valve consumes about four seconds. Once the product has been introduced in the sterilization chamber, valve 110a is opened for approximately five seconds to subject the sterilization chamber to the desired vacuum level. Valve 110a is then closed and valve 110b is then opened to introduce steam at the desired pressure. In this example, the valve is opened for five seconds followed by a closing of valve 110b and an opening of valve 105 for about two seconds to discharge the product. Valve 105 is then closed and the sterilization chamber subjected to a vacuum for about four seconds by opening vacuum valve 110a. The sequence then repeats itself with the opening of valve 104 with the sterilization chamber under vacuum so as to assist in the introduction of the product into the sterilization chamber. The use of vacuum to assist in introducing the product into the sterilization chamber can be eliminated if desired. For example, with spices the use of vacuum to assist in filling the sterilization chamber is generally not necessary. On the other hand, with leafy herbs the vacuum is a benefit.

As can be seen from the foregoing description, the entire process takes only about 20 seconds in this example. In this example, the sterilization chamber has a length of **12 inches** and a diameter of **6 inches.** Longer or shorter cycle times can be utilized and simple routine experimentation can be used to optimize this treatment time for each particular type of product. Furthermore, the degree of sterilization also affects the time in the sterilization chamber. That is, where the product is to be subject to further processing steps, such as cooking, complete sterilization to kill all microorganisms may not be necessary or desirable. On the other hand, a product that is to be packaged and shipped for use, longer times may be necessary to achieve the desired degree of sterilization.

As in the batch process of U.S. Patent 4,844,933, it will be appreciated by those skilled in this art that the precise temperature of the steam and pressure of injection into the sterilizing vessel will depend on the characteristics of the vegetable product being treated. For example, where the herb or spice being sterilized is to be subsequently used in another cooking process, somewhat lower effective sterilization, for bacteriocidal activity, may be tolerated, as opposed to a situation where the sterilized vegetable product is intended for packaging for an end user. Also, the reaction of various vegetable products in terms of sterilization, retention of volatile oil, essential flavor attributes and appearance, will vary from one plant specie to another so that a trial and error testing of samples of the specific material to be sterilized will be necessary. Use of the method and apparatus of the present invention, however, will permit standardization of treatment of large lots or batches of organic material originating from known sources and treated under previously known conditions.

Due to the fact that the product is exposed for only very brief time to a moderate pressure and a sterilizing temperature in vessel 12 in an enclosed system, a large percentage of the volatile oils of the herbs and spices will be retained which would otherwise be lost in an open process or in a process that essentially cooks the vegetable product. Further, precise control of the sterilization, cooling and dehydration parameters assures control of the appropriate moisture levels in the product which is critical to the overall appearance and shelf life of the product at the end of the cycle.

Having described the invention, it will be apparent that various modifications thereto may be made without departing from the spirit and scope of this invention as defined in the appended claims.

## Claims

1. A method of continuously sterilizing vegetable products containing volatile oils which comprises:
a) introducing said vegetable product into a sterilizing vessel into which steam is introduced at a time and temperature sufficient to sterilize the vegetable product,
b) discharging the sterilized vegetable product into a cooling zone,
c) disposing the vegetable product in the cooling zone in a manner such that the steam which exits the sterilizing vessel with the vegetable product is caused to condense on the vegetable product to thereby recovering volatile oils which had vaporized during the sterilizing process, and
d) recovering the vegetable product.

2. The method of claim 1 wherein the steam pressure in the sterilizing vessel is above atmospheric.

3. The method of claim 2 wherein the selected pressure is between 5 and 30 psig.

4. The method of claim 1 including the step of using leaf bearing vegetable products.

5. The method of claim 4 wherein the leaf bearing vegetable product is selected from the group including bay leaves, thyme, basil, marjoram, rosemary, savory, oregano, sage, mint, parsley cilantro, dill and tarragon.

6. The method of claim 1 including the step of using a hard shell spice.

7. The method of claim 6 wherein the hard shell spice includes a spice selected from the group comprising seeds, roots and barks.

8. The method of claim 7 wherein the hard shell spice is selected from the group including allspice, anise, annatto, caraway, cardamon, celery seeds, coriander, cumin, dill seed, fennel, fenugreek, mustard seed, nutmeg, poppy seed, cinnamon, ginger, turmeric and capsicum.

9. The method of claim 1 wherein the vegetable product has residence time in said sterilizing vessel of less than about 30 seconds.

10. The method of claim 1 including the step of conveying the vegetable product from said one end to said discharge end at a speed such that the residence time in said vessel is no less than two seconds.

11. The method of claim 1 wherein the vegetable product has a residence time in said sterilizing vessel of between about 2 and 30 seconds.

12. The method of claim 1 including the step of using a supply hopper having a discharge outlet for feeding the vegetable product to the inlet of the vessel, the supply hopper including a feed screw for positive feed of the product to the outlet of the supply hopper.

13. The method of claim 1 including the step of continuously agitating the vegetable product during the sterilizing step.

14. The method of claim 1 wherein the vegetable product discharged from cooling vessel is dried.

15. The method of claim 14 wherein the vegetable produce is dried to about the same moisture content it had prior to being subjected to the steam sterilizing step.

16. The method of claim 15 wherein the vegetable product is dried to a moisture content of about 6 to 12 wt.%.

17. The method of claim 1 wherein the steam is super heated steam.

18. The method of claim 1 wherein the steam is saturated steam.

19. The method of claim 18 wherein any condensate contained in the saturated steam is removed prior to introduction into the sterilizing vessel.

20. The method of claim 1 wherein the steam is introduced in a manner such that it also agitates the herbs during the sterilizing process.

21. The method of claim 1 wherein the vegetable product is agitated and conveyed during the cooling step.

22. An apparatus for sterilizing vegetable products containing volatile oils comprising a sterilizing vessel having an inlet and outlet means wherein each of said outlet means has a means for maintaining above atmospheric pressure within the vessel when product is either added to or removed from the vessel, a cooling vessel in fluid communication with said outlet means wherein said cooling vessel contains means for providing intimate contact between the vegetable product and the steam which exits from the sterilizing vessel when product is withdrawn therefrom, said means being capable of causing said steam to condense on said vegetable product during the cooling.

23. The apparatus of claim 22 wherein said sterilizing vessel has means for agitating the vegetable product..

24. The apparatus of claim 22 wherein said sterilizing vessel has a means for conveying said vegetable product from said inlet means to said outlet means.

25. The apparatus of claim 22 wherein a means for drying said vegetable product is provided at the discharge end of said cooling vessel.

26. The apparatus of claim 22 wherein the walls of the sterilizing vessel are provided with means for heating said walls.

27. The apparatus of claim 24 including the step of using a pair of spaced apart double butterfly valves disposed in a conduit system to receive vegetable product from a supply and to discharge any of the contents located between said butterfly valves to said vessel.

28. The apparatus of claim 25 wherein said drying vessel includes a screw conveyor and the method including the step of conveying the vegetable product through the drying vessel at a time interval between one minute and 120 minutes.

29. The apparatus of claim 22 wherein said cooling vessel is provided with a screw conveyor.

30. The method of claim 1 including the step of discharging the vegetable product from said airlock means at said discharge end to another vessel having an interior that is maintained at a temperature no greater than 140°F.

31. The method of claim 30 including the step of maintaining the interior of said another vessel at a temperature between 35 and 65°F.

32. The method of claim 30 including the step of continuously agitating the vegetable product in said another vessel.

33. The method of claim 32 including using a rotary paddle means to effect said agitation.

34. The method of claim 12 wherein said cooling vessel is provided with a screw conveyor.

35. The method of claim 1 including the step of injecting the vegetable product through said airlock means to said rotatable screw in discrete batches to avoid overloading said rotatable screw.

36. An apparatus for sterilizing vegetable products of the type having volatile oils comprising a sterilizing vessel having a generally longitudinal axis and an interior cylindrical wall, means for heating said wall to a selected temperature, said sterilizing vessel having a first end and an inlet at said first end and an opposite, second end and an outlet at said opposite, second end, airlock means at each of said inlet and outlet for controlling loading into and discharge from said sterilizing vessel, respectively, therethrough, a screw conveyor rotatably mounted on the interior of said vessel and extending along said longitudinal axis, means for injecting sterilizing steam into said vessel, means for rotating said screw and means for controlling the speed of screw rotation.

37. The apparatus of claim 36 including a supply hopper having a discharge outlet for feeding the vegetable product to the inlet of the vessel, the supply hopper including a feed screw for positive feed of the product to the outlet of the supply hopper.

38. The apparatus of claim 36 wherein each said airlock means comprises a first valve member pair and a second valve member pair with each valve member pair being mounted in supply conduit means connected to said inlet and discharge conduit means connected to said outlet, said valve members of each pair being spaced apart in said respective conduits to define a volume therebetween of a selected size.

39. The apparatus of claim 38 where valve control means are provided for each said airlock means to control the opening and closing of said respective valve members of each pair so that, for each pair of valve members, one valve member will be opened while the other valve member of the pair will be closed.

40. The apparatus of claim 36 wherein said outlet is connected through conduit means to a conduit leading to the inlet of a cooling vessel which is provided with jacket means for receiving a cooling fluid, said cooling vessel including means for agitating the contents thereof.

41. The apparatus of claim 40 wherein said cooling vessel includes an outlet and screw means for agitating and conveying the contents thereof to the outlet.

42. The apparatus of claim 40 wherein said cooling vessel has a discharge outlet connected to the inlet of a drying vessel.

43. The apparatus of claim 42 wherein the discharge outlet of said cooling vessel is provided with airlock means.

44. The apparatus of claim 42 wherein said drying vessel is provided on the interior thereof with a screw conveyor for transporting the contents thereof to a discharge outlet spaced from the inlet of said drying vessel.

45. The apparatus of claim 42 wherein said drying vessel is provided with a belt conveyor.

46. The apparatus of claim 42 wherein said drying vessel is provided with a fluidized bed dryer.

47. The apparatus of claim 46 wherein means vibrating the bed dryer is provided.

48. The apparatus of claim 42 wherein said drying vessel is a vacuum dryer.

49. An apparatus for sterilizing vegetable products containing volatile oils comprising the sterilization vessel having an inlet and outlet means capable of maintaining said sterilization vessel at pressures both above and below atmospheric, means for introducing culinary steam into said sterilizing vessel, a means for subjecting said sterilizing vessel to vacuum, a cooling vessel in fluid communication with said outlet means of said sterilizing vessel wherein said cooling vessel contains means for providing intimate contact between the vegetable product and the steam which exists from the sterilizing vessel when product is withdrawn therefrom, said means being capable of causing said steam to condense on said vegetable product during cooling.
